# EUROPEAN PATENT SPECIFICATION

(11) **EP 0 859 510 B1**
(45) Date of publication and mention of the grant of the patent: **04.06.2003**
(21) Application number: 98201178.5
(22) Date of filing: 31.03.1993
(51) Int. Cl.: H04N 5/765, H04B 1/20

(54) **Video interconnection system**
Videoverbindungssystem
Système d'interconnection vidéo

(30) Priority: 08.04.1992 EP 92201003
(43) Date of publication of application: 19.08.1998
(62) Divisional of application: 93200920.2
(73) Proprietor: Koninklijke Philips Electronics N.V., 5621 BA Eindhoven (NL)
(72) Inventor: Spiero, Richard Cess, Prof. Holstlaan 6, 5656 AA Eindhoven (NL); Douglas, Terence Alan, Prof. Holstlaan 6, 5656 AA Eindhoven (NL); Vlot, Marnix Claudius, Prof. Holstlaan 6, 5656 AA Eindhoven (NL)
(74) Representative: van der Kruk, Willem Leonardus

(56) References cited:
- EP-A- 0 130 036
- EP-A- 0 437 882
- EP-A- 0 507 433
- US-A- 4 337 480
- US-A- 4 855 730

## Description

The invention relates to a control signal generator unit that can be used in a video apparatus, comprising connector means and switching means, the connector means having a signal input terminal, a signal output terminal and a control signal terminal, the control signal generator unit having a first terminal for coupling to a control signal terminal of apparatus, and an output terminal for supplying a switching control signal for the switching means in the video apparatus.

Video apparatuses can be used in combination with other apparatuses so as to form a chain of apparatuses in which two signal paths are realized, a first 'down' path and a second 'up' path. The apparatuses in the chain can be coupled to each other via a signal bus in the form of a SCART connector. The control signal terminals in the connector means of the apparatuses are in that case the pins with number 10 in the SCART connectors.

It should be noted that SCART connectors and cables are well known in the art, see the magazine Funk-Technik 38(1983), heft 5, pp. 208-212 or EP-A-130 036.

The termination of the chain at the 'up' side can be realized by a television apparatus, provided with a single connector means. In the same way one further apparatus having a single connector means, preferably a videorecorder, can be connected to the 'down' end of the chain.

The videosignal transported via a path, such as the 'up' path can have various formats, such as CVBS, Y/C or RGB. The transmission of a CVBS videosignal requires only one signal line relative to ground. The transmission of the Y/C videosignal requires two signal lines, and the transmission of an RGB signal requires three signal lines relative to ground. The 'up' path, which realizes the signal transmission towards the television apparatus has the possibility of transmitting either one of the three videosignal formats mentioned above, that is CVBS via line 19 in the SCART cable, Y and C via the lines 19 and 15 respectively, and R,G and B via the lines 15, 11 and 7 respectively.

The 'down' path realizes the signal transmission towards the videorecorder, and realizes a videosignal transmission of either the CVBS or the Y/C format. CVBS is transmitted via the line 20 in the SCART cable, and Y and C are transmitted via the lines 20 and 7 respectively.

It should thus be noted that a signal input or output terminal does not necessarily mean a single input or output terminal, but can each comprise one, two or three subterminals, dependent of the signal format (or formats) that should be transmitted via the 'up' and 'down' path.

The invention has for its object to provide an enabling construction for the control signal generator unit and is defined by the features of claim 1. The control signal generator unit claimed has the advantage that it prevents high frequency crosstalk signals from occurring on the lines in the SCART cables carrying the video-and audiosignals.

These and other aspects of the invention will be further explained with reference to embodiments described in the following figure description, in which
figure 1, 2 and 3 show a number of situations in which an interconnection system of a number of videoapparatuses connected in a chain can be used,
figure 4 shows an adapter for use in the interconnection system,
figure 5 shows another embodiment of the adapter,
figure 6 shows an embodiment of the control signal generator unit in the videoapparatus,
figure 7 shows the message frame generated on the line 10 of the SCART cable,
figure 8 shows the various bit formats for the bits in the message frame of figure 7, and
figure 9 shows the interaction of an initiator and a follower on the line 10 of the SCART cable.

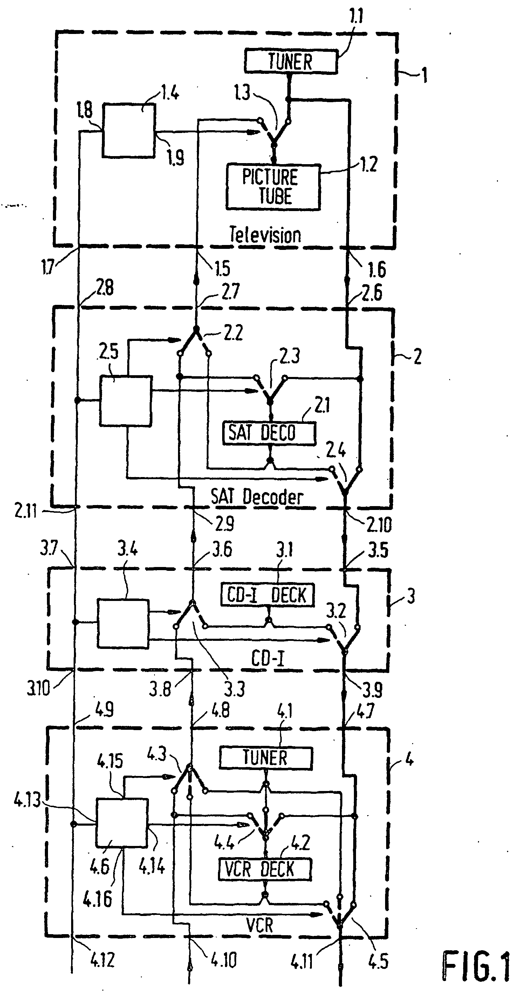

Figure 1 shows an interconnection system for a number of videoapparatuses, such as a television apparatus 1, a satellite decoder apparatus 2, a CD-I player 3 and a videorecorder 4. The television apparatus 1 includes a tuner 1.1, a picture tube 1.2, a source selector switch 1.3 and a microprocessor circuit 1.4. The television apparatus 1 further comprises connector means, preferably in the form of a SCART connector, having a signal input terminal 1.5, a signal output terminal 1.6 and a control signal terminal 1.7. The control signal terminal 1.7 is coupled to a terminal 1.8 of the microprocessor circuit 1.4.

The satellite decoder apparatus 2 comprises a satellite decoder 2.1, selector switches 2.2, 2.3 and 2.4, and a microprocessor circuit 2.5. The decoder apparatus 2 further comprises first connector means, preferably in the form of a SCART connector, having a signal input terminal 2.6, a signal output terminal 2.7 and a control signal terminal 2.8, and comprises second connector means, preferably in the form of a SCART connector, having a signal input terminal 2.9, a signal output terminal 2.10 and a control signal terminal 2.11. The control signal terminals 2.8 and 2.11 are interconnected.

The CD-I player 3 comprises a CD-I deck 3.1, selector switches 3.2 and 3.3 and a microprocessor circuit 3.4. The CD-I player 3 further comprises first connector means, preferably in the form of a SCART connector, having a signal input terminal 3.5, a signal output terminal 3.6 and a control signal terminal 3.7, and comprises second connector means, preferably in the form of a SCART connector, having a signal input terminal 3.8, a signal output terminal 3.9 and a control signal terminal 3.10. The control signal terminals 3.7 and 3.10 are interconnected.

The videorecorder 4 comprises a tuner 4.1, a VCR deck 4.2, selector switches 4.3, 4.4 and 4.5 and a microprocessor circuit 4.6. The videorecorder 4 further comprises first connector means, preferably in the form of a SCART connector, having a signal input terminal 4.7, a signal output terminal 4.8 and a control signal terminal 4.9, and comprises second connector means, preferably in the form of a SCART connector, having a signal input terminal 4.10, a signal output terminal 4.11 and a control signal terminal 4.12. The control signal terminals 4.9 and 4.12 are interconnected and coupled to a terminal 4.13 of the circuit 4.6.

The position of the selector switch 1.3 in the television apparatus 1 is electrically controllable by means of a control signal generated by the microprocessor circuit 1.4 and supplied to its output 1.9. The positions of at at least the selector switches 2.2 and 2.4 in the satellite decoder apparatus 2 are electrically controllable by means of control signals generated by the microprocessor circuit 2.5. The position of the selector switch 2.3 can be controlled either manually or electrically by means of a control signal generated by the microprocessor circuit 2.5. The positions of the selector switches 3.2 and 3.3 in the CD-I player 3 are electrically controllable by means of control signals generated by the microprocessor circuit 3.4. The positions of at least the selector switches 4.3 and 4.5 in the videorecorder 4 are electrically controllable by means of control signals generated by the microprocessor circuit 4.6 and supplied to its outputs 4.15 and 4.16. The position of the selector switch 4.4 can be controlled either manually or electrically by means of a control signal generated by the microprocessor circuit 4.6 and supplied to its output 4.14.

Identical apparatuses as the apparatuses 2, 3 and 4 described above, for instance a second videorecorder identical to the videorecorder 4, can be connected to the second connector means of the videorecorder 4.

The electrical line in the SCART cable connecting the control signal terminals 1.7 and 2.8, 2.11 and 3.7, 3.10 and 4.9 is line number 10 in that cable. The relevant terminals are thus in fact the pins number 10 in the SCART connectors.

Figure 1 shows the simplest connection. The only pertinent signal connection is the internal connection from the tuner 1.1 to the picture tube 1.2. All other apparatuses are in the standby mode, which implies that the selector switches 2.4, 3.2 and 4.5 are in the position as shown, so that the tuner signal, supplied by the television apparatus 1 at its signal output terminal 1.6 is looped through in downwards direction, so that, if needed, it can be recorded by the videorecorder 4, if its selector switch 4.4 is its correct position, namely to the right.

The signal path that is the most important for the specific mode is shown as a bold line. Signal paths of lesser significance are shown in medium bold lines, and the other paths that are non-relevant are shown in thin lines.

If the user decides to record the TV program supplied by the television apparatus, he positions the selector switch 4.4 in its right position, so that the signal input terminal 4.7 is coupled to the input of deck 4.2. The switching in of the recording mode in videorecorder 4 is detected in microprocessor 4.6. Upon detection of this switching in of the recording mode, it generates a control signal which is supplied via the output 4.9 to the other apparatuses. Upon receipt of this control signal in the microprocessors 2.5 and 3.4, those microprocessors are disabled to control the selector switches 2.4 and 3.2 respectively. The connection from the signal output 1.6 of the television apparatus downwards to the signal input 4.7 of the videorecorder 4 is thus maintained, and protected against disconnection upon switching either one of the apparatuses 2 or 3 from the standby mode in its switched-on mode.

Suppose that, while watching the TV program, the user decides to record another program. The user thus selects by means of the selector switch 4.4 the output of tuner 4.1 which supplies the other TV program. The microprocessor 4.6 detects the switching in of the recording mode of the videorecorder and subsequently generates a switching signal for the selector switch 4.3 so as to position the switch 4.3 so, that the output of the tuner 4.1 is coupled to the signal output terminal 4.8. The TV program being recorded can thus be checked by switching the switch 1.3 to the other position.

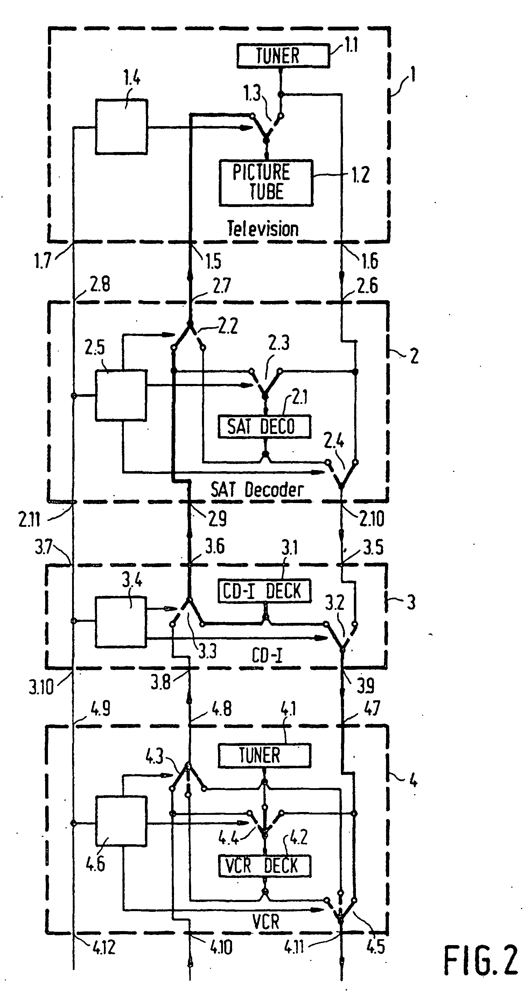

Figure 2 shows, when going out from the situation as shown in figure 1, the situation where the CD-I player 3 is switched to reproduction. Switching the CD-I player to reproduction is detected by the microprocessor 3.4, which supplies control signals to the selector switches 3.2 and 3.3 so as to position them in the position as shown. The signal reproduced is thus available at the signal outputs 3.6 and 3.9 of the player 3. The microprocessor 3.4 further generates a control signal at the control signal terminals 3.7 and 3.10, which control signal is thus supplied to all other apparatuses connected in the chain. Upon receipt of the control signal by the microprocessor 1.4 in the television apparatus 1, this microprocessor generates a switching signal which is supplied to the selector switch 1.3, under the influence of which the switch 1.3 is positioned in the position as shown. The signal reproduced by the CD-I player 3 can thus be displayed on the tube 1.2 of the television apparatus 1 and recorded by the videorecorder 4, if needed.

Recording the signal supplied by the CD-I player 3 means that the user selects the signal to be recorded by means of selector switch 4.4, by positioning the switch 4.4 in its right position, so that the signal input terminal 4.7 is coupled to the input of deck 4.2.

In the same way as has been said above with reference to figure 1, in relation to the recording of a TV program supplied by the television apparatus 1 by the videorecorder 4, it should be mentioned here that, the position of the switch 3.2 is protected, so that the connection between the output of CD-I deck 3.1 and the input of VCR deck 4.2 is maintained as long as recording continues.

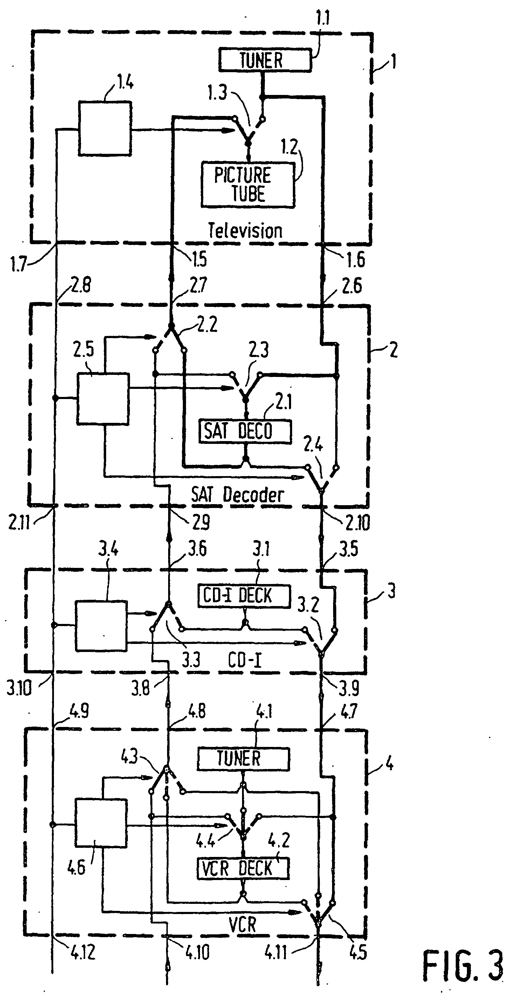

Figure 3 shows, when going out from the situation as shown in figure 1, the situation where the satellite decoder apparatus 2 is switched on. When the decoder apparatus 2 is switched on, the user must select whether the signal from the terminal 2.6 or from the terminal 2.9 should be decoded. In the case where watching is the prime intent, i.e. the television's tuner 1.1 is used, the signal input 2.6 is selected by means of the selector switch 2.3. Switching the satellite decoder apparatus on, is detected by the microprocessor 2.5, which supplies control signals to the selector switches 2.2 and 2.4 so as to position them in the position as shown. The decoded signal is thus available at the signal outputs 2.7 and 2.10 of the decoder apparatus 2. The microprocessor 2.5 further generates a control signal at the control signal terminals 2.8 and 2.11, which control signal is thus supplied to all other apparatuses connected in the chain. Upon receipt of the control signal by the microprocessor 1.4 in the television apparatus 1, this microprocessor generates a switching signal which is supplied to the selector switch 1.3, under the influence of which the switch 1.3 is positioned in the position as shown. The decoded signal supplied by the decoder apparatus 2 can thus be displayed on the tube 1.2 of the television apparatus 1 and recorded by the videorecorder 4, if needed.

From the above description it has become clear that the interconnection system comprises video apparatuses all, except for the television apparatus, having first and second connector means. Present day video apparatuses that are on the market usually have only one connector means in the form of a SCART connector. One such present day video apparatus could be connected via its single SCART connector to the non-used second connector means of the videorecorder 4. More such video apparatuses however, can not be connected together so as to form an interconnection system as shown in the figures.

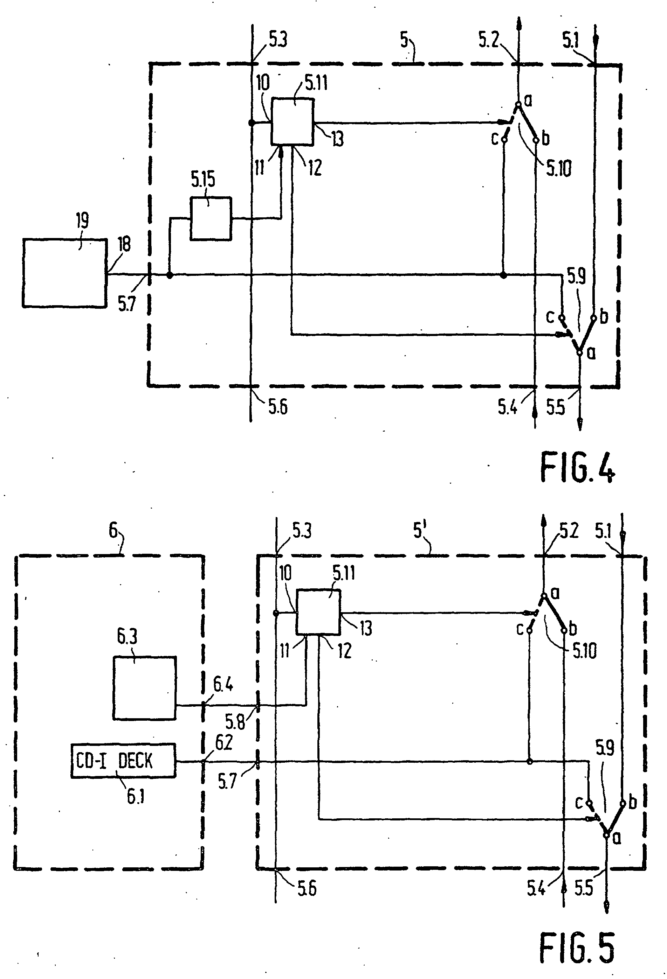

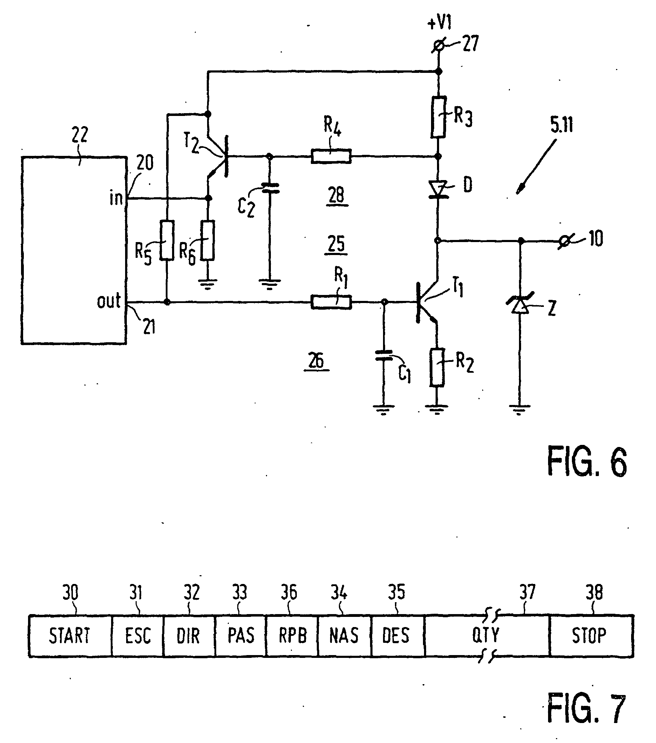

Figures 4 and 5 show embodiments of adapter apparatuses that can be used in the interconnection system, which adapter apparatuses enable present day video apparatuses to be connected to the interconnection system as described above.

Figure 4 shows an adapter apparatus for coupling a video source 19 provided with a single output 18, which can be a CVBS output of an Y/C output, to the interconnection system.

Figure 5 shows an adapter apparatus for coupling a present day video source, such as a CD-I player with a single SCART connector, to the interconnection system.

The adapter apparatus of figure 4 comprises first connector means having a signal input terminal 5.1, a signal output terminal 5.2 and a control signal terminal 5.3, second connector means having a signal input terminal 5.4, a signal output terminal 5.5 and a control signal terminal 5.6, and third connector means having a signal input terminal 5.7, first switching means 5.9, second switching means 5.10 and a microprocessor circuit 5.11. The first and the second connector means are again preferably in the form of a SCART connector. The terminals 5.3 and 5.6 are again the pins with number 10 in the first and second SCART connectors. The terminal a of the switching means 5.9 is coupled to the signal output terminal 5.5. Terminal b of the switch 5.9 is coupled to the signal input terminal 5.1. Terminal a of the switch 5.10 is coupled to the signal output terminal 5.2, and terminal b of the switch 5.10 is coupled to the signal input terminal 5.4. Terminals c of the switches 5.9 and 5.10 are both coupled to the signal input terminal 5.7. The microprocessor 5.11 has a first terminal 10 coupled to the interconnected control signal terminals 5.3 and 5.6, a second terminal 11 coupled to an output of a detector unit 5.15 and switch control signal outputs 12 and 13. The signal input terminal 5.7 is further coupled to an input of the detector unit 5.15. The microprocessor 5.11 is adapted to generate control signals at its outputs 12 and 13 so as to control the position of the switches 5.9 and 5.10. The microprocessor 5.11 generates the switch control signals at the outputs 12 and 13 in response to the control signals applied to the microprocessor via its terminals 10 and 11.

Figure 4 shows a video signal source 19, having a signal output terminal 18, eg. in the form of a CVBS output or an Y/C output, coupled to the signal input terminal 5.7 of the adapter apparatus 5.

The functioning of the adapter apparatus 5 is as follows. The adapter apparatus 5 can be coupled in the chain of figure 1, e.g. instead of the CD-I player 3 in the chain. This means that the terminals 5.1, 5,2 and 5.3 of the first connector of the adapter apparatus 5 are coupled to the terminals 2.10, 2.9 and 2.11 respectively of the satellite decoder 2 in figure 2, and that the terminals 5.4, 5.5 and 5.6 of the second connector of the adapter apparatus are coupled to the terminals 4.8, 4.7 and 4.9 respectively of the videorecorder 4 in figure 1. If the apparatus that is coupled to the third connector means of the adapter apparatus 5 is not switched on, or is in a standby mode, then the microprocessor 5.11 generates such control signals at its outputs 12 and 13 that the switches 5.9 and 5.10 are in the positions as shown in figure 4. Signals that are applied to the terminal 5.1 via the down-path are looped through to the terminal 5.5 and the signals that are applied to the terminal 5.4 in the up-path are looped through to the terminal 5.2.

Switching the signal source 19 'on' realizes a video signal to occur at the output 18, which signal is applied to the terminal 5.7. The detector 5.15 detects the transition from a 'no-signal' situation to a 'signal-present' situation and generates a control signal, which is applied to the terminal 11 of the microprocessor 5.11. Upon receipt of this control signal, the microprocessor 5.11 generates a control signal at least one of its two outputs 12 and 13, so that at least one of the switches 5.9 and 5.10 is switched to the other position. This one switch could be the switch 5.10, so that the signal input terminal 5.7 is coupled to the signal output terminal 5.2, via the switch 5.10. Further, the microprocessor 5.11 generates a control signal at the terminal 10 in response to the control signal applied to its input 11. This control signal generated by the microprocessor 5.11 is fed via the terminal 5.3 and the line with number 10 in the SCART cables between the adapter apparatus 5 and the satellite decoder apparatus 2 and between the satellite decoder apparatus 2 and the television apparatus 1 to the microprocessors 1.4 and 2.5 in the said apparatuses. Under the influence of this control signal, the microprocessor 2.5 generates a control signal for the switch 2.2 so that it is switched to the position in which the terminals 2.9 and 2.7 are connected with each other. Further, the microprocessor 1.4 generates a control signal so that the selector switch 1.3 is switched to the position in which the input of the picture tube 1.2 is connected to the signal input terminal 1.5. The video signal supplied by the signal source 19 will thus be visible on the picture tube 1.2 of the television apparatus 1.

The microprocessor 5.11 can be adapted to switch both switches 5.9 and 5.10 to the other position, in response to the control signal applied to its control input 11. In that situation, the video signal from the signal source 19 is also available for recording on the videorecorder 4. The adapter apparatus 5 can further be provided with a selection button (not shown), which can manually be activated so as to select either the output 5.2 or the output 5.5 to be the signal output terminal for the video signal applied to the input terminal 5.7 by the source 19. The manually activated button is coupled to the microprocessor 5.11 as well. Now the microprocessor 5.11 generates in response to the control signal applied to the input 11 a control signal at the output 12 or the output 13 dependent of the actuation of the selection button, so that a connection is made in the adapter 5 between the terminal 5.7 and either terminal 5.2 or terminal 5.5.

In the case that the videorecorder 4 records a video signal generated by the satellite decoder apparatus 2, it is said previously that the switches 2.4, which should be in its left position, and 3.2, which should be in its right position, are protected against a switching action to the other position. This means that, in the case that the CD-I deck 3 is replaced by the adapter apparatus 5, the switch 5.9 should be in the position as shown in figure 4 and that this switch should be in the same way protected from being switched over to the other position.

Figure 5 shows an adapter apparatus 5' which is slightly different from the adapter apparatus 5 of figure 4. The third connector means is now further provided with a control signal terminal 5.8 which is coupled to the second terminal 11 of the microprocessor circuit 5.11. The third connector means are preferably in the form of a SCART connector. Further the detector unit 5.15 of figure 4 has been left out.

Figure 5 shows a present day CD-I player 6 provided with a single SCART connector being coupled to the adapter apparatus 5'. The player 6 comprises a CD-I reproduction deck 6.1 having an output coupled to a signal output terminal 6.2 of the SCART connector, and a microprocessor 6.3 having a control signal output coupled to a control signal terminal 6.4 of the SCART connector. The terminal 6.4 is the pin with number 8 in the SCART connector, which is coupled to the control signal terminal 5.8 of the adapter apparatus 5'.

The functioning of the adapter apparatus 5' is as follows. The adapter apparatus 5' can again be coupled in the chain of figure 1, e.g. instead of the CD-I player 3 in the chain. If the CD-I player 6 that is coupled to the third connector means of the adapter apparatus 5' is not switched on, or is in a standby mode, then the microprocessor 5.11 generates such control signals at its outputs 12 and 13 that the switches 5.9 and 5.10 are again in the positions as shown in figure 5.

Switching the CD-I player 6 to reproduction, is detected by the microprocessor 6.3, and a control signal (logic 'one', or 'high') is generated at the terminal 6.4 (pin 8 of the SCART terminal), indicating that the player 6 now acts as a videosignal source. Upon receipt of this control signal, the microprocessor 5.11 generates a control signal at at least one of its two outputs 12 and 13, so that at least one of the switches 5.9 and 5.10 is switched to the other position. The functioning of the microprocessor 5.11 in response to the control signal applied to its terminal 11 is further identical to the functioning as described above with reference to figure 4. So, from a further discussion will be refrained.

Other embodiments of adapter apparatus are also possible, such as for connecting a present day videorecorder provided with a single SCART connector to the interconnection system.

Figure 6 shows an embodiment of the microprocessor circuit 5.11 in accordance with the invention. The microprocessor units 1.4, 2.5, 3.4 and 4.6 in the other apparatuses in figure 1 are of the same construction. The terminal 10, which should be coupled to pin 10 of the SCART cable, is coupled to an input 20 and an output 21 of a microcontroller chip 22 via an input-output circuit 25. The microcontroller chip 22 can be a microcontroller of the 8051 IC family, described in Philips components data handbook 1989, IC14 on microcontrollers NMOS, CMOS, such as the PCB80C51BH-3, see page 177 and on in the said data handbook.

The output 21 of the microcontroller 22 is coupled to the pin 10 via a lowpass filter 26, comprising the resistor R₁ and the capacitor C₁, and an amplifier, comprising the transistor T₁. The emitter of the transistor T₁ is coupled to a point of constant potential, which is earth, via a resistor R₂ of low resistive value. The collector of the transistor T₁ is coupled to terminal 10, via a zener diode Z to the said point of constant potential (earth), and via a series connection of a diode D and a resistor R₃ to an other point 27 of constant potential, which is a positive voltage v₁ of eg. 5 Volts.

The terminal 10 is coupled to the input 20 of the microcontroller 22 via the diode D, a lowpass filter 28 comprising a resistor R₄ and a capacitor C₂, and an amplifier, comprising the transistor T₂. The collector of the transistor T₂ is coupled to the point 27 of constant potential, which point is further coupled to the input 21 of the microcontroller 22 via a resistor R₅. The emitter of the transistor T₂ is coupled to the input 20 of the microcontroller 22 and via a resistor R₆ to earth.

The line 10 in the SCART cable interconnecting the apparatuses is a single communication bus between the apparatuses which operates in a 'wired-and' configuration, where each apparatus contains a pull-up resistor, which is the resistor R₃ in figure 6 connected to the positive voltage at point 27. Communication on the bus is initiated by an apparatus pulling the bus low. Pulling the bus low is realized by the microcontroller 22 by switching the voltage at the output 21 to 'high', which equals a voltage of 5 Volts. The presence of the lowpass filter 26 means that a gradual change from the 'high' state to the 'low' state at the terminal 10 takes place. The inclusion of the lowpass filter 26 is necessary in order to prevent high frequency crosstalk signals from occurring on the lines in the SCART cables carrying the video-and audiosignals. In the absence of the lowpass filter 26, the signal transitions from the 'high' to the 'low' state, or vice versa, at the output 21 would result in high currents at the terminal 10, causing the crosstalk signals to occur. The lowpass filter 26 filters out the high frequency components in the signal transitions, so that they do not appear at the terminal 10.

The input 20 senses the signal present at the terminal 10, in order to receive a message from another apparatus. The lowpass filter 28 prevents impulsive noise present on the terminal 10 from receiving the input 20, so that they can not be detected erroneously by the microcontroller as messages from other apparatuses. The lowpass filter 28 could eventually be realized in software in the controller 22.

The zenerdiode might be included so as to obtain a further protection against the occurrence of impulsive disturbances on the earth connection in the SCART cable, which disturbances can be the result of static discharges that occurred in eg. the television apparatus.

The diode D is needed in order to isolate the terminal 10 from earth, if the apparatus incorporating the microprocessor circuit of figure 6 is switched off.

The diode D and the transistor T₂ should be chosen such that their threshold values are substantially equal, so that the voltages at terminal 10 and the input 20 are substantially equal.

Communication over the line 10 could take place in the way as described in European patent application 437,882 A1 (PHN 13215), see especially the description relating to figure 3 in the said application. Another way of communicating over the line 10 will be described hereafter.

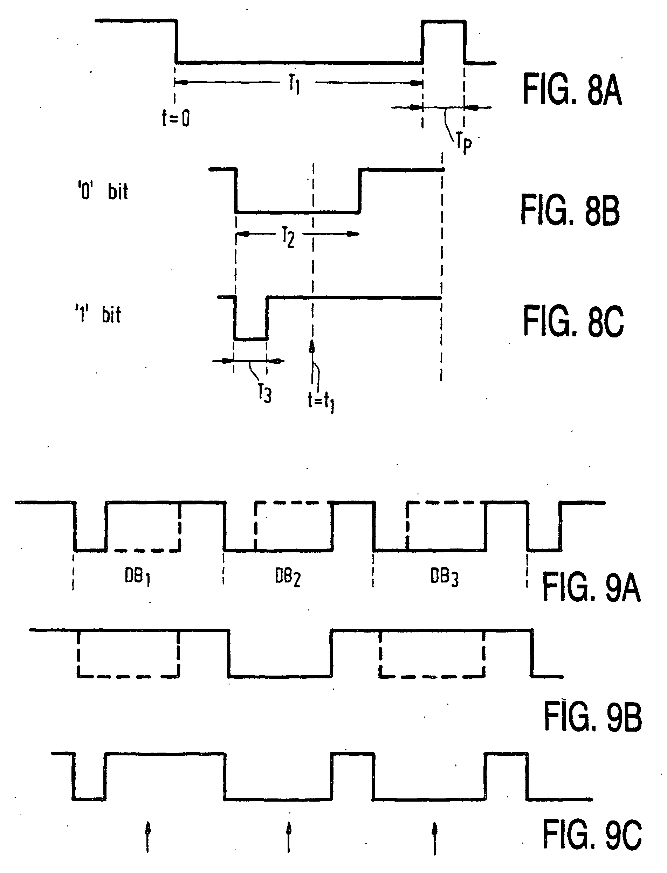

Communication on line 10 is initiated by an apparatus pulling the bus 'low' and subsequently generating a message frame, pulse coded as shown in figure 7. The message frame of figure 7 comprises a start bit 30, an escape bit ESC 31, a direction bit DIR 32, a PAS bit 33, a NAS bit 34, a destination bit DES 35, a record protect bit RPB 36, a number of quality bits QTY 37 and a stop bit 38. The pulse formats of all the bits, except for the start, and eventually the stop bit, are identical. The start bit has a format as shown in figure 8a. The other bits can be a 'zero' ('0') bit, or a 'one' ('1') bit. The formats of the '0' and '1' bits are shown in figure 8b and 8c respectively.

An apparatus that intends to initiate a communication via line 10 is called an initiator. In order to become an initiator, an apparatus must first test that line 10 is free for use. That is, the line must be 'high' for a certain minimum period of time. Then the initiator starts a message by generating the start bit. That is, it generates a high-to-low transition on the bus, at time t=0 in figure 8a, followed by a low-to-high transition after a specific period of time T₁. The pulse format of the start bit is unique for the purpose of identifying the start of a message frame. The start bit must be validated by its 'low' duration T₁ and its pulse duration Tₚ. The start bit is followed by a series of data bits whose starting point is defined by subsequent high-to-low transitions. The databits include a low-to-high transition which occur a time interval T₂ or T₃ after the high-to-low transition, dependent whether the data bit is a '0' bit or a '1' bit respectively, see figure 8b and c.

Apparatuses that respond to these high-to-low transitions from an initiator are called followers. There can be more than one follower at a time. The sampling instant for detecting whether a databit is '0' or '1' is at t=t₁ in the figure 8b and c. Followers can share in generating databits as shown in figure 9. Figure 9a shows the initiator's output signal, generating three databits DB₁, DB₂ and DB₃ of the values '1', '0' and '0' respectively. Figure 9b shows the follower's output signal. From figure 9b it can be seen that a follower leaves the line 10 'high' for a logical '1' and a logical '0' is generated by pulling the bus low immediately after the high-to-low transition from the initiator. Figure 9c shows the resulting signal on line 10. The arrows show the time instants for detecting the databits by an apparatus connected to line 10.

Failure to validate the startbit must result in a follower ignoring the rest of the message frame.

The ESC bit 31 is generated only by the initiator and must be a logical zero to indicate that the following data is of the contents and the format as described above. The DIR bit 32 is generated by the initiator to indicate the signal path, the 'up' path, or the 'down' path, that is under control in the current message frame. This bit must be used by all active followers to determine that each apparatus is active in the same direction before participating in the communication.

The PAS (present active source) bit 33 is a bit whose value is pulled down (logical zero) by an active signal source when a source is currently active in the direction as indicated by the preceding DIR bit. Only one source can be active in one direction (either the 'up' or the 'down' direction). Active followers of the same direction must test and use this bit in the decision as to whether or not to use the subsequent signal quality data.

The NAS (new active source) bit 34 is a bit whose value is pulled down (logical zero) by an initiator that is attempting to source its videosignals onto the SCART interconnection. When this bit is 'zero', the current active source must respond by removing its videosignals.

The RPB (record protect) bit 36 is an arbitration type bit, as explained with reference to figure 11. Its level is normally '1' if the signal path indicated by the DIR bit is free to use. However, the signal path can be in use by at least two apparatuses cooperating together over the said signal path in order to record a signal, that is a videorecorder and eg. a videosignal source such as a CD-I player. In that situation the signal path will be record protected, which means that the signal path is protected against an interference by a new active source. The RPB bit will be pulled down now to '0' by one of the at least two active apparatuses that communicate with each other over the signal path in question.

The DES (destination) bit 35 is also an arbitration type bit. Its level is pulled down (logical zero) by all devices acting as active videosignal destinations of the same direction. This bit must be zero in order to act on subsequent signal quality data.

The signal quality bits QTY 37 are arbitration type bits. Source and destination apparatuses will generate a 'low' bit if a videosignal with a certain signal quality, such as Y/C or RGB can not be generated or processed.

The stop bit 38 can have the same structure as the start bit. It is also possible that the stop bit equals a '1' bit, as per figure 10c.

The response of the control signal generator means 5.11 on a control signal applied to the input 11 will be explained hereafter. In response to the control signal, a message frame as discussed above is generated at the terminal 10. The message frame should indicate that a new source wants to become active. Further the message frame indicates in which direction (in upwards direction: the DIR bit equals '1', or downwards direction: the DIR bit equals '0') the new source wants to supply its signal. The generator means 5.11 tests whether the RPB bit (record protect bit) 36 for the specified direction is pulled low by an apparatus which is active in the chain. Such an already active apparatus can be a videorecorder which records a signal supplied by an other active source which supplies a signal in that same direction to the videorecorder. If a 'low' RPB bit is detected for the specified direction (let us assume that this is the upwards direction), the control signal generator 5.11 does not generate a switching signal to the switch 5.10, so that the switch 5.10 remains in its position a-b.

In response to the RPB bit being '0', or because the generator means 5.11 is adapted to automatically generate two message frame, one in each direction, the generator means 5.11 can eventually generate a new message frame for the other direction (downwards), in order to determine the possibilities of supplying the signal in the downwards direction.

If no RPB bit being 'zero' has been detected for a specified direction, the generator means 5.11 generate a control signal to at least the switches 5.9 or 5.10 for the specified direction, so as to enable the signal supplied by the source 19, 6 or 7, to be transported in upwards and/or downwards direction to a destination apparatus. The NAS bit will become 'zero'.

## Claims

1. A control signal generator unit (1.4,4.6) comprising a control unit (22), **characterized in that** the control signal generator unit further comprises an input-output circuit, the input-output circuit comprising a first terminal (10) coupled to a first terminal (1.8,4.13) of the control signal generator unit, an input (21) coupled to an output of the control unit (22), and an output (20) coupled to an input (20) of the control unit, the input of the control unit (22) for sensing a signal present at said first terminal (10) and the output of the control unit (22) for supplying control signals to be transmitted via the first terminal (10), and the the input-output circuit further comprising first low pass filter means (26) coupled between the input (21) and the first terminal (10), diode means (D) coupled between the first terminal (10) and a first point of constant potential (27) and a signal path (28) for coupling the output (20) to the first terminal (10).

2. Control signal generator unit as claimed in Claim 1, **characterized in that** it further comprises a first amplifier (T₁, R₂) coupled between the first low pass filter means (26) and the first terminal (10).

3. Control signal generator unit as claimed in claim 1 or 2, **characterized in that** it further comprises a zenerdiode (Z) coupled between the first terminal (10) and a second point of constant potential (earth).

4. Control signal generator unit as claimed in Claim 1 or 2, **characterized in that** it further comprises second low pass filter means (28) coupled between the first terminal (10) and the output terminal (20).

5. Control signal generator unit as claimed in Claim 1 or 2, **characterized in that** a second amplifier (T₂,R₆) is coupled between the first terminal (10) and the output terminal (20).

6. Control signal generator unit (1.4,4.6) as claimed in anyone of the preceding claims, for use in a video apparatus (1,4), **characterized in that** it has the first terminal (1.8,4.13,10) for coupling to a control signal terminal (1.7,4.9) of the video apparatus, and an output terminal (1.9, 4.15) for supplying a switching control signal for switching means (1.3,4.3) provided in the apparatus, the control signal generator unit (1.4,4.6) being adapted to generate the switching control signal for the switching means (1.3,4.3), in response to a message frame applied to the first terminal (10), and further being adapted to generate such message frame, for application to the first terminal (1.8,4.13,10), for supply to another video apparatus.

## Patentansprüche

1. Steuersignalgeneratoreinheit (1.4, 4.6) mit einer Steuereinheit (22) , **dadurch gekennzeichnet, dass** die Steuersignalgeneratoreinheit weiterhin eine Eingangs-Ausgangsschaltung aufweist, wobei die Eingangs-Ausgangsschaltung die nachfolgenden Elemente umfasst: einen ersten Anschluss (10), der mit einem ersten Anschluss (1.8, 4.13) der Steuersignalgeneratoreinheit gekoppelt ist, einen Eingang (21), der mit einem Ausgang der Steuereinheit (22) gekoppelt ist, und einen Ausgang (20), der mit einem Eingang (20) der Steuereinheit, dem Eingang der Steuereinheit (22) zum Abtasten eines Signals, das an dem genannten ersten Anschluss (10) vorhanden ist, und dem Ausgang der Steuereinheit (22) zum Liefern von Steuersignalen, die über den ersten Anschluss (10) übertragen werden sollen, gekoppelt ist, und wobei die Eingangs-Ausgangsschaltung weiterhin die nachfolgenden Elemente umfasst: erste Tiefpassfiltermittel (26), die zwischen dem Eingang (21) und dem ersten Anschluss (10) vorgesehen sind, Diodenmittel (D), die zwischen dem ersten Anschluss (10) und einem ersten Punkt konstanten Potentials (27) vorgesehen sind, und eine Signalstrecke (28) zur Kopplung des Ausgangs (20) mit dem ersten Anschluss (10).

2. Steuersignalgeneratoreinheit nach Anspruch 1, **dadurch gekennzeichnet, dass** diese weiterhin einen ersten Verstärker (T₁, R₂) aufweist, der zwischen den ersten Tiefpassfiltei-mitteln (26) und dem ersten Anschluss (10) vorgesehen ist.

3. Steuersignalgeneratoreinheit nach Anspruch 1 oder 2, **dadurch gekennzeichnet, dass** sie weiterhin eine Zener-Diode (Z) aufweist, die zwischen dem ersten Anschluss (10) und einem zweiten Punkt konstanten Potentials (Erde) vorgesehen ist.

4. Steuersignalgeneratoreinheit nach Anspruch 1 oder 2, **dadurch gekennzeichnet, dass** sie weiterhin zweite Tiefpassfiltermittel (28) aufweist, die zwischen dem ersten Anschluss (10) und dem Ausgangsanschluss (20) vorgesehen sind.

5. Steuersignalgeneratoreinheit nach Anspruch 1 oder 2, dadurch gekeimzeichnet, dass zwischen dem ersten Anschluss (10) und dem Ausgangsanschluss (20) ein zweiter Verstärker (T₂, R₆) vorgesehen ist.

6. Steuersignalgeneratoreinheit (1.4, 4.6) nach einem der vorstehenden Ansprüche, zur Verwendung in einem Videogerät (1,4), **dadurch gekennzeichnet, dass** sie den ersten Anschluss (1.8, 4.13, 10) hat zur Kopplung mit einem Steiersignalanschluss (1.7, 4.9) des Videogeräts, und einen Ausgangsanschluss (1.9, 4.15) zum Liefern einen schaltenden Steuersignals für Schaltmittel (1.3, 4.3) in dem Gerät, wobei die Steuersignalgeneratoreinheit (1.4, 4.6) dazu vorgesehen ist, das Schaltsteuersignal für die Schaltmittel (1.3, 4.3) zu erzeugen, und zwar in Reaktion auf ein Nachrichtenframe, das dem ersten Anschluss (10) zugeführt wird, und weiterhin dazu vorgesehen ist, ein derartiges Nachrichtenframe zu erzeugen, zur Zuführung zu dem ersten Anschluss (1.8, 4.13, 10) zur Lieferung zu einem anderen Videogerät.

## Revendications

1. Unité de génération de signal de commande (1.4, 4.6) comprenant une unité de commande (22), **caractérisée en ce que** l'unité de génération de signal de commande comprend encore un circuit d'entrée-sortie, le circuit d'entrée-sortie comprenant une première borne (10) qui est couplée à une première borne (1.8, 4.13) de l'unité de génération de signal de commande, une entrée (21) qui est couplée à une sortie de l'unité de commande (22) et une sortie (20) qui est couplée à une entrée (20) de l'unité de commande, l'entrée de l'unité de commande (22) pour détecter un signal présent à l'endroit de ladite borne (10) et la sortie de l'unité de commande (22) pour fournir des signaux de commande à transmettre par l'intermédiaire de la première borne (10), et le circuit d'entrée-sortie comprenant encore un premier moyen de filtre passe-bas (26) qui est couplé entre l'entrée (21) et la première borne (10), et un moyen de diode (D) qui est couplé entre la première borne (10) et un premier point de potentiel constant (27), et un chemin de signal (28) pour coupler la sortie (20) à la première borne (10).

2. Unité de génération de signal de commande selon la revendication 1, **caractérisée en ce qu'**elle comprend encore un premier amplificateur (T₁, R₂) qui est couplé entre le premier moyen de filtre passe-bas (26) et la première borne (10).

3. Unité de génération de signal de commande selon la revendication 1 ou 2, **caractérisée en ce qu'**elle comprend encore une diode de Zener (Z) qui est couplée entre la première borne (10) et un deuxième point de potentiel constant (masse).

4. Unité de génération de signal de commande selon la revendication 1 ou 2, **caractérisée en ce qu'**elle comprend encore un deuxième moyen de filtre passe-bas (28) qui est couplé entre la première borne (10) et la borne de sortie (20).

5. Unité de génération de signal de commande selon la revendication 1 ou 2, **caractérisée en ce qu'**un deuxième amplificateur (T₂, R₆) est couplé entre la première borne (10) et la borne de sortie (20).

6. Unité de génération de signal de commande (1.4, 4,6) selon l'une quelconque des revendications précédentes 1 à 5 pour être utilisée dans un appareil vidéo (1.4), **caractérisée en ce qu'**elle présente la première borne (1.8, 4.13, 10) pour être couplée à une borne de signal de commande (1.7, 4.9) de l'appareil vidéo, et une borne de sortie (1.9, 4.15) pour fournir un signal de commande de commutation pour des moyens de commutation (1.3, 4.3) qui sont prévus dans l'appareil, l'unité de génération de signal de commande (1.4, 4.6) étant adaptée à générer le signal de commande de commutation pour les moyens de commutation (1.3, 4.3) en réaction à une trame de message qui est appliquée à la première borne (10) et étant encore adaptée à générer une telle trame de message pour être appliquée à la première borne (1.8, 4.13, 10) pour être fournie à un autre appareil vidéo.
